(19) Europäisches Patentamt
European Patent Office
Office européen des brevets

(11) **EP 4 060 358 B1**

(12) **EUROPEAN PATENT SPECIFICATION**

(45) Date of publication and mention of the grant of the patent:
**07.06.2023 Bulletin 2023/23**

(21) Application number: **21163675.8**

(22) Date of filing: **19.03.2021**

(51) International Patent Classification (IPC):
*G01R 31/36* (2020.01)     *G01R 31/367* (2019.01)
*G01R 31/378* (2019.01)     *G06F 21/73* (2013.01)
*H04L 9/08* (2006.01)     *H04L 9/40* (2022.01)
*G06F 21/81* (2013.01)     *G06K 9/00* (2022.01)
*G06F 21/44* (2013.01)     *H01M 10/42* (2006.01)
*G06N 3/08* (2023.01)

(52) Cooperative Patent Classification (CPC):
**G01R 31/367; G01R 31/36; G01R 31/378;
G06F 21/73; H01M 6/5066; H01M 10/4221;
H04L 9/0866; H04L 63/0861;** G01R 31/3646;
G06F 21/44; G06F 2221/2139; G06N 3/08

(54) **PHYSICAL FINGERPRINT FOR A BATTERY SYSTEM**

PHYSIKALISCHER FINGERABDRUCK FÜR EIN BATTERIESYSTEM

EMPREINTE PHYSIQUE POUR SYSTÈME DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.09.2022 Bulletin 2022/38**

(73) Proprietor: **Technische Hochschule Ingolstadt
85049 Ingolstadt (DE)**

(72) Inventors:
• **Mittmann, Christoph
85134 Stammham (DE)**
• **Paula, Daniel
86641 Rain (DE)**

• **Schweiger, Hans-Georg
85049 Ingolstadt (DE)**
• **Böhm, Klaus
85049 Ingolstadt (DE)**

(74) Representative: **Lucke, Andreas
Boehmert & Boehmert
Anwaltspartnerschaft mbB
Pettenkoferstrasse 22
80336 München (DE)**

(56) References cited:
**EP-B1- 2 571 076     EP-B1- 2 571 131
CA-A1- 2 788 472     US-B2- 10 145 898**

**Description**

FIELD OF THE INVENTION

The present invention is in the field of battery management. In particular, the invention relates to the generation of an identifier for a battery system, which uniquely identifies the battery system and allows detecting manipulations, and to a method of using such identifier for identifying a battery system and eventually reporting a system manipulation.

BACKGROUND OF THE INVENTION

With the advent of commercially available electro-mobility, battery technology is presently becoming more and more relevant. Besides transportation-related uses, battery technology is also being intensively pushed forward in view of the technical aim of using battery systems for efficiently and reliably storing energy at industrial or domestic level. Therefore, it is becoming increasingly important to provide means and methods for identifying a battery system, i.e. for making it possible to tell a given battery system from another battery system having the same or similar nominal properties, in particular without disassembling the battery system.

For similar reasons, as the use of battery technology becomes more and more extended, in particular in the context of electric cars and other vehicles such as e-scooters, electric bikes and the like, the need of spotting an unauthorised manipulation of a battery system arises. For example, a manufacturer or service provider may offer a guarantee for a battery system subject to the condition that no non-authorised manipulation of the battery system takes place at user end. It may hence be relevant to identify situations in which a battery system has been accessed by a non-authorised operator.

Presently known techniques for providing an identifier for a battery system mostly rely on the use of dedicated hardware: one known possibility consists in using dedicated monitoring hardware, such as an electrically erasable programmable read-only memory (EEPROM), an access-protected monitoring unit and corresponding communication interfaces, and in the implementation of query-reply-algorithms based on an exchange of randomly generated data. Other known solutions rely on the use of a network of passive resistances connected to the battery system to be identified: in case one or more batteries or the system are modified or replaced, a variation in the overall resistance value of the system can be detected.

These solutions however, have the disadvantage of requiring dedicated hardware, which besides constituting an additional source of possible failures, increases manufacturing and maintenance costs as well as complexity. Document US 10 145 898 B2 discloses a battery signature identification system which involves validating the origin of a battery when measured battery characteristics are within range of validation parameters provided by the manufacturer. Further prior art is disclosed in documents EP 2 571 076 B1, EP 2 571 131 B1 and CA 2 788 472 A1 which all disclose to perform identity checking of a battery based on measured physical properties of the battery.

Thus, there is room for technical improvement in the generation and use of an identifier for a battery system.

SUMMARY OF THE INVENTION

The present invention aims at solving the problem of providing a battery management system and a method allowing to univocally identify a system of energy storage devices, in particular a system of batteries, overcoming the technical drawbacks of previously known solutions described above. This problem is solved by a method for generating an identifier for a system of energy storage devices according to claim 1. The invention further refers to a method for checking the identity of a system of energy storage devices according to claim 12, whereby an identifier generated according to the invention is used for eventually detecting a non-authorised manipulation of the system of energy storage devices. A further aspect of the invention is a battery management system according to claim 15 for implementing the methods of the invention. Preferred embodiments of the invention are defined in the appended dependent claims.

A first aspect of the invention refers to a method for generating an identifier for a system of energy storage devices. The method may in particular be a software-based and/or a computer-implemented method. The system of energy storage devices comprises a plurality of mutually connected energy storage devices. The energy storage devices may be mutually connected in series and/or in parallel. For example, some of the energy storage devices may be electrically connected in parallel with respect to each other while other energy storage devices of the system are electrically connected in series with respect to each other.

The energy storage devices may in particular be batteries. However, the energy storage devices may be or comprise other types of energy storages such as a primary cell or a fuel cell.

The method comprises providing a standard model for predicting one or more state parameters of the energy storage devices as a function of one or more measurable physical variables and of one or more model parameters. The standard model may be predefined or may be determined from scratch as part of the execution of the method of the invention.

The "measurable physical variables" may refer herein to physical properties of the energy storage devices that may be measured during operation using appropriate equipment for a given energy storage device and that may describe the operation conditions of that given energy storage device. The measurable physical variables may in particular comprise a temperature, a pressure, a voltage, a current intensity and/or a time, for example a relaxation time.

The "one or more state parameters" of the energy storage devices may be physical properties of the energy storage devices describing an output of electrical energy provided by a corresponding energy storage device. The "one or more state parameters" may in particular comprise a terminal voltage, i.e. a voltage or potential difference measured across the terminals of the battery when there is no load connected thereto or any quantity related thereto.

Additionally or alternatively, the "one or more state parameters" may comprise a temperature, for example a temperature estimated for a given energy storage device or group thereof, in particular when the temperature is not a measurable physical variable, i.e. is not a variable being directly measured. Information about the temperature of the energy storage devices may for example allow determining the distribution of current intensity among different energy storage devices or groups thereof electrically connected in parallel with respect to each other.

The "model parameters" may refer herein to parameters that define a model-specific correlation between the measurable physical variables and the one or more state parameters. The model parameters may hence determine a model-specific functional dependence of the one or more state parameters on the physical variables.

The "standard model" may refer herein to a type of functional relationship between the measurable physical variables and the one or more state parameters, for example a polynomial, an exponential or a logarithmic functional relationship. The model parameters may correspond to the coefficients of such functional dependence, for example to coefficients corresponding to a best-fit of a set of data (containing values of both the state parameters and the physical variables) to the corresponding functional relationship. The standard model may in particular be a battery model. The model parameters may (initially) be the same for all energy storage devices.

For instance, thinking of a simple and oversimplified mathematical example for explanatory purposes only, a standard model may predict a linear dependence of the terminal voltage $V_t$ (state parameter) of each energy storage device on the temperature $T$ (physical variable), i.e. a dependence based on a function, $V_t = p_1 T + p_0$. In this case, the model would be a linear model for the terminal voltage as a function of the temperature and $p_1$ and $p_0$ would be the corresponding model parameters, whose values may be set to correspond to a best-fit of a set of experimental or simulated data of $(V_t, T)$ pairs of values.

The standard model may be any of a mathematical model, an electrochemical model and/or an electrical equivalent circuit model. However, the standard model preferably is an electrical equivalent circuit model. The aim of the standard model is to provide reliable predictions of the one or more state parameters of the energy storage devices, in particular taking into account the electrochemical and temperature-dependent behaviours of the energy storage devices. Due to the non-linear behaviour of energy storage devices, the requirements of any standard model can be arbitrarily high in terms of complexity and precision. Therefore, a balance must be found between precision and computational resource requirements. As the present inventors found out, electrochemical models tend to require a lot of computational resources for the purposes of the present invention and mathematical models may lack a direct connection to the physical properties of the system. Therefore, electrical equivalent circuit models have turned out to be particularly advantageous for the purposes of the present invention in terms of achieving an acceptable balance between precision and computational resource requirements.

Thus, in a more realistic example, the standard model may correspond to a battery equivalent circuit model, whereby all energy storage devices or a subset thereof are modelled as an equivalent circuit having a number of RC networks defined by the model. The number of RC networks is usually referred to as the "order" of the battery equivalent circuit model, which constitutes a trade-off between model accuracy and computational complexity. The higher the order, the more accurate the model is, but the more computationally complex it becomes. In such a model, the model parameters can correspond to the resistance and capacity values (or alternatively to the resistance and time constant values) of the different RC networks of the equivalent circuit. Such a battery equivalent circuit model can output a value of the terminal voltage of the modelled energy storage device or group of energy storage devices for corresponding measured values of the temperature, the voltage and the current intensity at which said energy storage devices operate, as a function of the corresponding model parameters and of the open circuit voltage (OCV) of the corresponding equivalent circuit.

The OCV depends on the state of charge (SOC) of the corresponding energy storage device or group of energy storage devices. The SOC can be estimated in manners known to the skilled person, for example based on a coulomb counting method or on the use of an OCV-SOC curve or look-up table.

For the purposes of the present invention, a battery equivalent circuit model of first or preferably of second order, i.e. having one or preferably two RC networks, respectively, may be employed. Correspondingly, the model parameters can in some examples be three resistance values $R_0$, $R_1$, $R_2$ and two capacity values $C_1$, $C_2$, or three resistance values $R_0$, $R_1$, $R_2$ and two RC time constants $\tau_1$, $\tau_2$ characterising a second grade RC equivalent circuit. More involved and accurate models may further include a hysteresis voltage as a further model parameter.

Based on these model parameters, the standard model may output a value of the terminal voltage of the modelled energy storage device or group of energy storage devices for the corresponding measurable physical variables, which are used as input variables.

The method further comprises providing, for each of the energy storage devices, a set of measured values of each of the one or more physical variables. The set of measured values may be obtained by direct measurement using appropriate measuring equipment such as sensors, detectors and/or corresponding control electronics in a manner accessible to a skilled person. The corresponding detection processes may be part of the method of the invention. However, providing a set of measured values may refer, within the meaning of the present invention, to simply obtaining information comprising such measured values, for example receiving the measured value as input data from the aforesaid appropriate measuring equipment. Such measuring equipment may be configured for obtaining measurements for each of the energy storage devices or at least of a part thereof. However, the measuring equipment may also be configured for obtaining collective measurements for a number of subgroups of the energy storage devices into which the energy storage devices of the system may be divided. For example, the measuring equipment may be configured for obtaining measurements of a given physical variable for a plurality of energy storage devices being mutually connected in series or parallel. Such measuring equipment may in particular correspond to standard measuring and monitoring equipment included in most battery management systems present in the market, which can advantageously be used for implementing the method of the invention.

As used herein, an "energy storage device" may refer to an individual device, for example a single battery, or to a group thereof, for example to a group of any number of mutually connected batteries. Thus, unless otherwise stated, whenever reference is made in the present applications to measurements being "of each of the energy storage devices" it should be understood that these may be measurements corresponding to single energy storage devices or to pluralities of energy storage devices, for example to each of a number of branches of energy storage devices, with the energy storage devices in each branch being mutually connected in series and the branches being electrically connected in parallel with respect to each other.

For example, providing a set of measured values of each of the one or more physical variables for each of the energy storage devices (or for each branch) may comprise collecting a set of values of temperature, voltage and/or current intensity for each energy storage device (or for each branch), in particular over a period of time, for example over 10 seconds of an operation time of the system or over 1 minute of an operation time of the system, wherein "operation time" may in particular refer to a time during which the energy storage devices of the system are supplying or receiving electric energy, i.e. are charging or discharging. In some embodiments, the measured values may be continuously obtained, irrespectively of a charging or discharging state of the energy storage devices. For that purpose, corresponding sensors configured for measuring temperature, voltage and/or current intensity may be appropriately coupled to each of the energy storage devices (or to each branch). As a result, a corresponding set of experimental data may be obtained for each physical variable being measured and for each energy storage device (or for each branch).

The method of the invention further comprises determining, for each of the energy storage devices (or for each branch), at least one parameter correction based on the corresponding set of measured values. Each parameter correction is a correction of a corresponding one of the one or more model parameters, such that when the one or more model parameters are corrected by the corresponding parameter corrections, the standard model provides a more accurate prediction of the one or more state parameters of the corresponding energy storage device, in particular as a function of the physical variables and of the corrected model parameters.

A "more accurate prediction" may refer in particular to a theoretical prediction with a smaller statistical error with respect to an empirical measurement or a plurality thereof. In other words, when the model parameters are corrected by the corresponding parameter corrections, they may provide a "better fit" of the standard model.

Since the parameter corrections for each given energy storage device are based on a corresponding set of measured values that have been obtained by means of measurements specific for that given energy storage device, they allow improving the accuracy of the standard model for each given energy storage device in terms of reliably predicting the behaviour of the one or more state parameters as a function of the physical variables, inasmuch as the particularities of each given energy storage device, in particular the manufacturing tolerances thereof, are automatically taken into account.

When energy storage devices are manufactured, their properties are typically guaranteed by the manufacturer within a predefined manufacturing tolerance. Thus, while some or all of the energy storage devices of a battery system may have the same nominal properties and should, theoretically (in view of their nominal properties), have identical physical behaviours, in practice each individual energy storage device may have a different individual behaviour or a different deviation from the ideal behaviour foreseen based on nominal properties. This is for example due to the exact values of the internal capacity and the internal resistance for each individual energy storage device, which may depend on the specific particularities of the corresponding manufacturing process and material composition, including chemical impurities. Such internal values may hence exhibit in reality, in each individual case, a different discrepancy with respect to the respective nominal values.

According to the invention, the parameter corrections are determined for each energy storage device such as to improve the accuracy of the standard model when used for correcting the corresponding model parameters specifically for a given energy storage device (or group of energy storage devices), as compared to an accuracy achieved by the standard model for values of the initial values of the model parameters. Such initial values may be values determined for the battery system as a whole and/or values determined based on the nominal properties of the energy storage devices, i.e. without taking into account the particular manufacturing deviations from the nominal properties that are specific of each individual energy storage device. This means that, once the model parameters are corrected by the corresponding parameter corrections for a particular energy storage device, a prediction of a value of a state parameter of that particular energy storage device obtained by the standard model for a given value of each the one or more physical variables will be closer to the real physical value than a prediction obtained by the standard model using the non-corrected model parameters.

The parameter corrections may be determined using statistical techniques and algorithms that are per se known to the skilled person, in particular state estimation techniques, for example Kalman filtering algorithms or recursive least square algorithms. A good review of state estimation approaches that may be used within the context of the present invention is provided in Y. Wang et al., "A comprehensive review of standard modeling and state estimation approaches for advanced battery management systems," Renew. Sustain. Energy Rev., vol. 131, no. July, p. 110015, 2020. In some embodiments of the invention, the at least one parameter correction may be determined by any of these techniques or algorithms, in particular by a state estimation algorithm, preferably a Kalman filtering algorithm or a recursive least square algorithm.

Additionally or alternatively, the parameter corrections may be determined by a machine learning algorithm, such as a neural network, trained on experimental or simulated data sets containing values of the one or more state parameters and of the one or more physical variables. A possible approach to state estimation using neural networks that may be used within the context of the present invention is provided in B. Wu, W. D. Widanage, S. Yang, and X. Liu, "Battery digital twins: Perspectives on the fusion of models, data and artificial intelligence for smart battery management systems," Energy and AI, vol. 1, p. 100016, 2020.

In some embodiments of the invention, the at least one parameter correction may be determined by a machine learning algorithm trained on experimental or simulated datasets containing values of the one or more state parameters and corresponding values of the one or more physical variables, preferably a neural network.

Notably, it is not necessary for the method of the invention, in particular for determining the parameter corrections, to obtain measured values of the one or more state parameters. Instead, the aforementioned algorithms are sufficient for obtaining parameter corrections that lead to a higher accuracy of the standard model, in particular based on the measurements of the one or more measurable physical variables.

The method of the invention further comprises generating an identifier of the system of energy storage devices comprising the at least one parameter correction determined for each of the energy storage devices. Notably, "comprising the at least one parameter correction determined for each of the energy storage devices" may mean, within the context of the present application, comprising the at least one parameter corrections themselves or functions thereof. Thus, the identifier generated according to the method of the invention may comprise the at least one parameter corrections but may comprise instead at least one parameter correction functions having a functional dependence on the corresponding parameter corrections. An example of a parameter correction function depending on a corresponding parameter correction can for example be a scattering parameter associated to that corresponding parameter correction.

The determined parameter corrections are thus used for generating the identifier. The combination of energy storage devices present in a system of energy storage devices, which inevitably exhibit different deviations from their nominal properties within the corresponding manufacturing tolerances, and their arrangement in the system lead to a combination of parameter corrections that can be assumed to be random in view of the randomness of the combination of different deviations from the nominal properties. Based on that, the present inventors realised that the parameter corrections obtained by the method of the invention can be used to generate an identifier that uniquely identifies the system, as it presently is, in particular for the present physical conditions of operation of the energy storage devices such as temperature, age and state of charge. In order to exploit the benefits of relying on the pseudorandomness generated by the parameter corrections, it is irrelevant for the purposes of the invention whether the identifier is generated to comprise the parameter corrections themselves or to comprise any other quantities related to or depending on the parameter corrections, such as scattering parameters.

Notably, the method of the invention does not require any dedicated hardware component for being implemented and can be implemented in an entirely software-based manner on existing battery management systems. In essence, the randomness that is exploited for generating a unique identifier is generated - possibly inadvertently - at a manufacturing stage by means of the practically random arrangement of the energy storage devices in the system and of the corresponding distribution of precise deviations from the nominal properties, which are - within the corresponding manufacturing tolerances - different for each energy storage device.

According to some preferred embodiments, the identifier of the system of energy storage devices may be generated comprising the at least one parameter correction determined for each of the energy storage devices in an ordered sequence or structure. Thus, when generating the identifier, the parameter corrections of the different energy storage devices may be incorporated in a predetermined sequence or arrangement, such that the identifier may have a structure allowing to associate different parts of the identifier with different energy storage devices. For example, for a set of N energy storage devices $B_1$, $B_2$, $B_3$,..., $B_N$ (wherein, as previously explained, each $B_i$, i=1,...,N may denote a single energy storage device or an electrically connected plurality thereof) and a set of M model parameters $P_1$, $P_2$,... $P_M$, a total of N x M parameter corrections $\Delta P_{ij}$ may be determined, with i = 1,..., N and j = 1, .., M and the identifier of the system may be generated as an ordered sequence $\Delta P^1_1$, $\Delta P^1_2$,..., $\Delta P^N_{M-1}$, $\Delta P^N_M$, although any other ordering or arrangement is possible. Generating the identifier according to an ordered sequence or structure allows directly comparing identifiers that may be independently generated by the method of the invention, in particular for the same system of energy storage devices. As long as the predetermined ordered sequence or structure used for generating the identifier is the same, differences between the identifiers due to the different ordering of the parameter corrections when generating the identifier can be discarded.

In some embodiments of the invention, the parameter corrections may be determined as scattering parameters and the identifier of the system of energy storage devices may be generated as a scattering matrix comprising all scattering parameters or at least a part thereof.

According to some preferred embodiments, the standard model may be a preset model and providing the standard model may comprise obtaining predetermined values of the model parameters. The predetermined values of the model parameters may for example be stored in an information storage device or obtained from a control interface via a corresponding communication link. Preferably, the predetermined values of the model parameters may be values predetermined by a manufacturer of the system of energy storage devices. Energy storage device manufacturers typically develop and apply standard models with corresponding parameter values that can be used according to the invention as the predetermined values of the model parameters, i.e. as the initial values of the one or more model parameters prior to the execution of the method of the invention.

Additionally or alternatively, providing the standard model may comprise determining fitted values of the model parameters by fitting the model parameters to a set of measured values of the physical variables obtained for a least a part of the energy storage devices. In other words, it is not necessary for the method of the invention that a pre-existing standard model with corresponding predetermined values of the respective model parameters be provided before the method of the invention can be carried out. Instead, the method of the invention may include providing a standard model from scratch and determining the corresponding values of the model parameters of the standard model by fitting to a set of measured values of the physical variables obtained for at least a part of the energy storage devices. This may for example take place during an initialisation phase of the method of the invention, in which a standard model may be defined, for example selected from a look-up table containing a plurality of candidate standard models. During such initialisation phase, a set of measured values of the physical variables may be used for providing an initial fit or estimate of the model parameters.

According to preferred embodiments of the invention, the one or more physical variables may comprise a temperature, a pressure, a voltage, a current intensity, a time (for example a relaxation time), a combination thereof or a physical quantity determined as a function thereof, such as for example a state of charge of a corresponding energy storage device. Measured values of any combination of these physical variables may be obtained.

For example, it is possible to obtain a state of charge (SOC) of a corresponding energy storage device or group of energy storage devices from measured values of the corresponding voltage, current intensity and temperature, for instance by means of current integration, state estimation, or by means of an open circuit voltage approach (OCV-SOC). A more comprehensive list of techniques available for obtaining a state of charge is provided in M. A. Hannan, M. S. H. Lipu, A. Hussain, and A. Mohamed, "A review of lithium-ion battery state of charge estimation and management system in electric vehicle applications: Challenges and recommendations," Renew. Sustain. Energy Rev., vol. 78, no. August 2016, pp. 834-854, 2017.

In preferred embodiments of the invention, the generated identifier may further comprise a fix identifier part. A fix identifier part refers herein to an identifier part, i.e. a part of the final identifier obtained through the method of the invention, which needs not be obtained based on calculations related to the standard model, but may instead be independently provided. For example, the fix identifier part may be a predefined identifier part such as a key number or a serial number, or may be a randomly generated number with a predetermined length or number of digits.

The identifier generated by the method of the invention may hence comprise a fix identifier part, which may act as a static part of the identifier, and an identifier part generated from the determined parameter corrections, which may act as a dynamic part of the identifier.

In some embodiments of the invention, the method may further comprise storing the generated identifier in an information storage device. The information storage device may for example be any component of a battery management system allowing to store data therein, such as a flash memory, a hard drive, a cloud-connected storage system or the like. This may allow recovering the generated identifier for future reference.

In some preferred embodiments of the invention, the method may further comprise encrypting the generated identifier. For example, the generated identifier may be encrypted before being stored in an information storage device. The identifier may be encrypted using any of the encryption algorithms available in the art, such as Hashing or RSA. In embodiments in which the identifier comprises a fix identifier part, for example in the form of a fix serial number, the fix identifier part can act as a static component of the identifier while the identifier generated according to the method of the invention acts as a dynamic part of the identifier for encryption purposes.

According to preferred embodiments of the invention, the steps of:

- providing, for each of the energy storage devices, a set of measured values of each of the one or more physical variables;

- determining, for each of the energy storage devices, at least one parameter correction based on the corresponding set of measured values, wherein each parameter correction is a correction of a corresponding one of the one or more model parameters, such that when the one or more model parameters are corrected by the corresponding parameter corrections, the standard model provides a more accurate prediction of the one or more state parameters of the corresponding energy storage device; and

- generating an identifier of the system of energy storage devices comprising the at least one parameter correction determined for each of the energy storage devices;

may be cyclically repeated, in particular periodically repeated. The aforementioned method steps may for example be repeated in predetermined periods of 0,1 s, 1 s, 10 s, 1 minute, 1 hour, 24 hours. However, the repetitions need not be periodic any may be based on system-state-related cycles, for example every time the system of energy storage devices initiates operation.

By cyclically repeating the aforementioned method steps, it is possible to progressively adapt the value of the model parameters (and hence of the parameter corrections and of the corresponding identifier) in order to keep track of an evolution of the physical properties of the system in time, for example due to ageing of the energy storage devices. The inventors realised that, in real operation conditions, the model parameters, which are dependent on the temperature and on the age of the energy storage devices, normally vary slowly in time, for which it is possible to update their values cyclically. The identifier generated according to the method of the invention thereby "ages along" with the system and adapts to varying environmental conditions such as temperature or pressure and may hence be progressively modified in time. It is hence possible to avoid the risk of an identifier becoming useless with time due to ageing of the system for which it was generated in the past. Instead, according to the present invention, the identifier can be updated such that it always reflects the present conditions of the system of energy storage devices.

For example, the parameter corrections obtained at a given time for a corresponding age of the energy storage devices and corresponding environmental conditions of operation, which may be used for generating a first identifier of the system, may substantially differ from the parameter corrections obtained at a later time for a later age of the energy storage devices and/or for different environmental conditions of operation, which may be used for generating a second identifier of the system. As a consequence, the first and second identifiers may substantially differ from each other and may hence prevent the system from being identified as one and the same system and/or may lead to a false system manipulation being detected. By cyclically repeating the aforementioned method steps and thereby progressively adapting the value of the model parameters by corresponding parameter corrections, the identifier generated with the method of the invention can be "kept up to date" with respect to the age of the energy storage devices and/or varying environmental conditions.

A second aspect of the invention refers to a method for checking the identity of a system of energy storage devices. The method comprises comparing an updated identifier with a former identifier. The updated identifier is an identifier generated for the system of energy storage devices according to the method of the first aspect of the invention based on newly determined values of the parameter corrections. The former identifier is an identifier that was previously generated for the system of energy storage devices, also according to the method of the first aspect of the invention, based on previously determined values of the parameter corrections. The method may in particular be a software-based and/or a computer-implemented method.

The former identifier is hence an old identifier, which may for example have been generated in a previous periodic cycle or the last time the system of energy storage devices started operation. In contrast, the updated identifier may be the most recent identifier generated for the system of energy storage devices according to the method of the first aspect of the invention.

The method of the second aspect of the invention further comprises reporting an identity mismatch if the updated identifier does not correspond to the former identifier. Since both the former identifier and the updated identifier are generated according to the method of the first aspect of the invention and are indirectly determined by the physical properties of the energy storage devices included in the system, a significant mismatch between the updated identifier and the former identifier can be assumed to be due to a modification in the physical properties of the system, for example due to a manipulation of the system, such as a manipulation or replacement of one or more of the energy storage devices of the system. Thus, according to the method of the second aspect of the invention, the identifier generated according to the method of the first aspect of the invention can be advantageously exploited for detecting an unauthorised manipulation of the system of energy storage devices.

Like the method of the first aspect of the invention, the method for checking the identity of a system of energy storage devices of the second aspect of the invention requires no dedicated hardware and can be implemented as a purely software-based solution, for example in most existing battery management systems.

In preferred embodiments of the invention, an identity mismatch may be reported if the updated identifier does not correspond to the former identifier within a predefined tolerance, or if a correlation between the updated identifier and the former identifier is below a predefined correlation threshold. Introducing a predefined tolerance or a predefined correlation threshold for deciding whether an identity mismatch is reported may allow avoiding false mismatch reports caused by mismatches between the updated identifier and the former identifier that are not due to any manipulation of the system but which may rather be due to ageing or to changing environmental conditions of the system.

The invention further refers to a battery management system comprising a processor that is configured to perform the method for providing an identifier for a system of energy storage devices according to the first aspect of the invention and or the more checking the identity of a system of energy storage devices according to the second aspect of the invention.

The invention further refers to an electric vehicle or an energy storage facility incorporating such a battery management system.

BRIEF DESCRIPTION OF THE DRAWINGS

Fig. 1    shows a system of energy storage devices connected to a battery management system according to the invention.

Fig. 2    is a flow diagram schematically illustrating a method implemented by the battery management system of Fig. 1 for generating an identifier for the system of Fig. 1 according to the invention.

Fig. 3    shows a second order (2-RC) equivalent circuit of an energy storage device.

Fig. 4    is a diagram schematically illustrating a method implemented by the battery management system of Fig. 1 for checking the identity of the system of Fig. 1 according to the invention.

DETAILED DESCRIPTION OF PREFERRED EMBODIMENTS

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

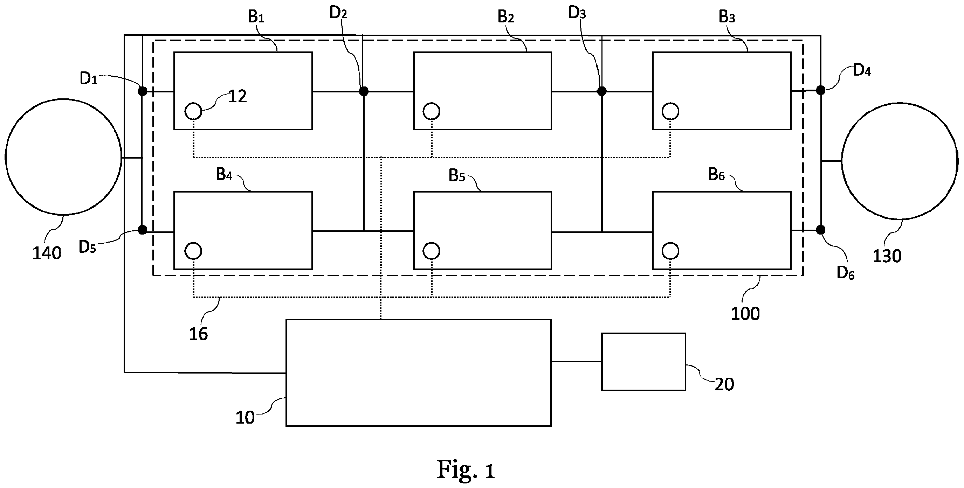

Fig. 1 schematically illustrates a battery management system 10 (BMS) according to the invention, which is functionally connected to a system 100 of energy storage devices $B_1$, ... $B_6$. In the exemplary embodiment shown, only six energy storage devices are shown for illustrative purposes. However, the BMS 10 may be connected to a system 100 comprising any number N of energy storage devices.

In the exemplary embodiment shown, the energy storage device $B_1$ is electrically connected in parallel to the energy storage device $B_4$, the energy storage device $B_2$ is electrically connected in parallel to the energy storage device $B_5$, and the energy storage device $B_3$ is electrically connected in parallel to the energy storage device $B_6$. Further, each of the pairs of energy storage devices $(B_1, B_4)$, $(B_2, B_5)$ and $(B_3, B_6)$ are electrically connected in series with respect to each other. Notably, other arrangements and electrical connection schemes are possible for the energy storage devices of the BMS 10 and Fig. 1 simply shows an example for illustrative purposes.

As shown in Fig. 1, the system 100 can be electrically connected to an energy output 130 (electric load), and can be configured for providing electrical energy to the energy output 130. The energy output 130 may for example be an electric motor or a device charging terminal powered by the system 100. When electric power flows from the energy storage devices of the system 100 to the energy output 130, the energy output 130 can operate on the energy provided by the energy storage devices and the energy storage devices discharge.

As shown in Fig. 1, the system 100 can be electrically connected to an energy input 140 (electric source), and can be configured for receiving electrical energy from the energy input 140. The energy input 140 may for example be an external battery charger, a connection to an electric network, or an electric generator configured for charging the energy storage devices of the system 100.

Each of the energy storage devices $B_1$, ... $B_6$ is coupled with a corresponding temperature sensor 12 that can provide measurement values of a temperature of the corresponding energy storage device to the BMS 10 via a temperature sensing bus 16. Thus, the BMS 10 can obtain value of the temperatures of each of the energy storage devices $B_1$, ... $B_6$.

In addition, the BMS 10 is functionally and/or electrically connected with each of a plurality of measurement points $D_1$, ..., D6, corresponding to connection nodes at which the energy storage devices $B_1$, ... $B_6$ are connected, in order to obtain corresponding measurements of voltage and current intensity of an electric current flowing therethrough. For example, the BMS 10 can measure a first value of current intensity between the measurements points $D_1$ and $D_4$, corresponding to the current intensity flowing through the upper branch shown in Fig. 1, in which the energy storage devices $B_1$, $B_2$ and $B_3$ are electrically connected in series, and a second value of current intensity between the measurements points $D_5$ and $D_6$, corresponding to the current intensity flowing through the lower branch shown in Fig. 1, in which the energy storage devices $B_4$, $B_5$ and $B_6$ are electrically connected in series.

Further, the BMS 10 can measure a first value of voltage between the measurement points $D_1$ and $D_2$, corresponding to a voltage between the terminals of each of the energy storage devices $B_1$ and $B_4$, which are mutually connected in parallel. Likewise, the BMS 10 can measure a second value of voltage between the measurement points $D_2$ and $D_3$, corresponding to a voltage between the terminals of each of the energy storage devices $B_2$ and $B_5$, and a third value of voltage between the measurement points $D_3$ and $D_4$, corresponding to a voltage between the terminals of each of the energy storage devices $B_3$ and $B_6$.

Thus, the BMS 10 can obtain values of the current intensities and the voltages at which each of the energy storage devices $B_1$, ... $B_6$ operate.

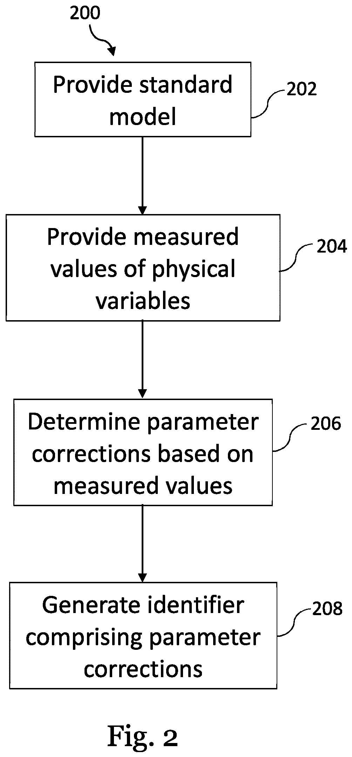

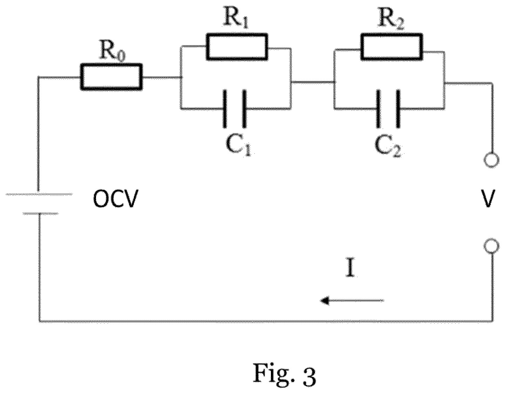

The BMS 10 includes a processor that can be configured to implement the methods that are explained in the following with respect to each of Fig. 2 and 3.

Fig. 2 shows a flow diagram schematically illustrating a method 200 for generating an identifier for the system 100 implemented by the BMS 10 of Fig. 1.

At step 202, a standard model is provided. The standard model allows predicting one or more state parameters of the energy storage devices $B_1$, ... $B_6$ as a function of J measurable physical variables $X_j$, with j = 1,..., J, and of M model parameters $P_m$, with m = 1,..., M.

The standard model can for example be a second grade equivalent circuit battery model, whereby each of the energy storage devices $B_1$, ... $B_6$ is represented by a 2-RC equivalent circuit as the circuit shown in Fig. 3. This model allows obtaining a value of the corresponding terminal voltage $V^T_n$ (n=1, ..., 6) of each of the energy storage devices $B_1$, ... $B_6$ as a function of five model parameters ($P_1 = R_0$, $P_2 = R_1$, $P_3 = C_1$ or $\tau_1$, $P_4 = R_2$, $P_5 = C_2$ or $\tau_2$) in a manner that is per se known to the skilled person (for example from C. Zhang et al., "Online estimation of battery equivalent circuit model parameters and state of charge using decoupled least squares technique", Energy, Volume 142, 2018, Pages 678-688). In the exemplary embodiment shown, only five model parameters are considered. However, the standard model can be based on other numbers M of model parameters.

The value of the terminal voltage obtained according to this exemplary standard model for each of the energy storage devices $B_1$, ... $B_6$ also depends on the open circuit voltage (OCV) of the corresponding equivalent circuit battery model shown in Fig. 3. Such OCV can be estimated based on measured values of 3 corresponding measurable physical variables: temperature, current intensity and voltage ($X_1 = T$, $X_2 = I$, $X_3 = V$), in a manner that is per se known to the skilled person. The OCV is also dependent on the SoC of the corresponding energy storage device, which as previously mentioned, can also be estimated using known techniques (see for example M. A. Hannan et al., "A review of lithium-ion battery state of charge estimation and management system in electric vehicle applications: Challenges and recommendations," Renew. Sustain. Energy Rev., vol. 78, no. August 2016, pp. 834-854, 2017).

The standard model can be a preset standard model designed and tested by a manufacturer of the energy storage devices $B_1$, ... $B_6$, for example based on the nominal properties of the energy storage devices $B_1$, ... $B_6$, which can be stored in the BMS 10 with predetermined values of the model parameters ($P_1 = R_0$, $P_2 = R_1$, $P_3 = C_1$, $P_4 = R_2$, $P_5 = C_2$). However, the BMS 10 can also be configured to obtain initial values of the model parameters ($P_1$, ..., $P_5$) as best-fit values based on a set of measured values of the physical variables ($X_1$, ..., $X_3$), which can be obtained during an initialisation phase. In the latter case, the BMS 10 needs not contain any preset values of the model parameters and only requires the basic model structure.

The standard model used by the BMS 10 provides a prediction of the terminal voltage of each of the energy storage devices $B_i$, i =1,...6 as a function of the 5 model parameters ($P_1$, = $R^i_0$, $P^i_2 = R^i_1$, $P^i_3 = C^i_1$, $P^i_4 = R^i_2$, $P^i_5 = C^i_2$)

and of the 3 input physical variables ($X^i_1 = T^i$, $X^i_2 = I^i$, $X^i_3 = V^i$).

The predetermined or initial values of the model parameters ($P_1, = R^i_0$, $P^i_2 = R^i_1$, $P^i_3 = C^i_1$, $P^i_4 = R^i_2$, $P^i_5 = C^i_2$) can for example be, the first time method step 202 is carried out, equal for each of the energy storage devices $B_1, ... B_6$ and do not initially account for the particular physical properties of each of the energy storage devices $B_1, ... B_6$, such as their manufacturing tolerances or material impurities.

At step 204 of the method 200, the BMS 10 provides a set of measured values of each of the physical variables ($X^i_1 = T^i$, $X^i_2 = I^i$, $X^i_3 = V^i$), i = 1,...,6.

The measured values of the physical variables ($X^i_1$, $X^i_2$, $X^i_3$) can be obtained by the BMS 10 by obtaining corresponding measurement values at the respective measurement points $D_1, ..., D_6$ and from the corresponding temperature sensors 12, respectively. For example, for the energy storage device $B_1$, a corresponding voltage value $X^1_3 = V^1$ can be measured between measurement points $D_1$ and $D_2$, a corresponding current intensity value $Xb = I^1$ can be measured between measurement points $D_1$ and $D_2$ (or $D_1$ and $D_4$), and a corresponding temperature value $X^1_1 = T^1$ can be measured by the temperature sensor 12 of the energy storage device $B_1$. The same applies to each of the energy storage devices $B_1, ... B_6$.

The measured values of the physical variables ($X^1_1$, $X^i_2$, $X^i_3$) can for example be obtained at different times during an initialisation phase, for example in regular cycles every 1 s, such that for example a collection of 60 measures values are obtained for each physical variable and for each energy storage device over 1 minute of operation time.

At step 206, the BMS 10 determines, for each of the five model parameters $P^i_j$ i = 1,...,6; j = 1,...,5; and for each of the energy storage devices $B_i$, i = 1, ... 6, a corresponding parameter correction $\Delta P^i_j$ i = 1,...,6; j = 1,...,5 based on the corresponding set of measured values. The parameter corrections $\Delta P^i_j$ are computed such that, when each of the model parameters for a given energy storage device is corrected by the corresponding parameter corrections, the accuracy of the corresponding predicted value of the terminal voltage is improved. In other words, given the set ($P^i_1$, $P^i_2$, $P^i_3$, $P^i_4$, $P^i_5$) of model parameters for a given energy storage device $B_i$, the standard model provides a better prediction of the terminal voltage for the corrected model parameters $P^i j + \Delta P^i_j$ than for the non-corrected model parameters $P^i_j$.

The BMS 10 can be configured for determining the parameter corrections $\Delta P^i_j$ from the corresponding set of measured values of the physical variables $X^i_1$, $X^i_2$, $X^i_3$ based on a recursive state estimation technique, for example on a Kalman filtering algorithm or on recursive least square algorithms. The BMS 10 can also be configured for determining the parameter corrections $\Delta P^i_j$ using a machine learning algorithm, for example a neural network, correspondingly trained on experimental or simulated datasets containing values of the terminal voltages of the energy storage devices and corresponding values of the one or more physical variables $X^i_1$, $X^i_2$, $X^i_3$.

At step 208, the BMS 10 generates an identifier for the system 100 comprising all parameter corrections $\Delta P^i_j$ or functions thereof $f(\Delta P^i_j)$ in an ordered sequence and a fix identifier part FIX, which can correspond to a fix random generated number. The identifier 120 can hence have for example the following structure:

| FIX | $f(\Delta P^1_1)$ | $f(\Delta P^1_2)$ | $f(\Delta P^1_3)$ | ... | $f(\Delta P^6_3)$ | $f(\Delta P^6_4)$ | $f(\Delta P^6_5)$ |
|---|---|---|---|---|---|---|---|

wherein $f(AP^i_j)$ can for example be $\Delta P^i_j$ or a covariance value associated to $\Delta P^i_j$.

The identifier is generated as a string beginning with the fix identifier part FIX, followed by an ordered sequence of identifier components each corresponding to a function of one of the parameter corrections, i.e. each taking into account the precise specific properties and manufacturing tolerances of a corresponding one of the energy storage devices. In other examples, the identifier can be generated having other structures, for example having a different ordering of the parameter corrections or their functions and/or having a matrix structure.

The BMS 10 can further be configured for encrypting the generated identifier 120, for example according to an RSA algorithm using the fix identifier part FIX as a static component of the identifier and the identifier part $f(\Delta P^1_1)$, ..., $f(\Delta P^6_6)$ as a dynamic part of the identifier, and for storing the identifier in an information storage device 20 that is connected thereto. The information storage device 20 can for example be a flash memory or a hard-drive connected to the BMS 10.

Since the identifier intrinsically takes into account the specific properties of each of the energy storage devices $B_i$, i = 1, ... 6, in particular their manufacturing tolerances, by differently determining the parameter corrections for each of them, the identifier 120 is generated being unique without requiring any dedicated hardware and taking into account the present physical conditions of operation of the energy storage devices such as temperature, age and state of charge, which are intrinsically accounted for when determining the parameter corrections.

The BMS 10 is configured for cyclically repeating steps 204 - 208 in order to determine the parameter corrections $\Delta P^i_j$ again and generate, based thereon, an updated identifier. Steps 204 - 208 may for example be periodically repeated in periods of a predetermined duration such as 1 minute, 10 minutes or 1 hour. However, it is also possible to repeat steps 204 - 208 in predefined non-periodic cycles, for example every time the system 100 is started for operation, which can for example be every time an electric car in which the system 100 is installed is started. The steps of encrypting the generated (updated) identifier and of storing it in the information storage device 20 can also be repeated every cycle.

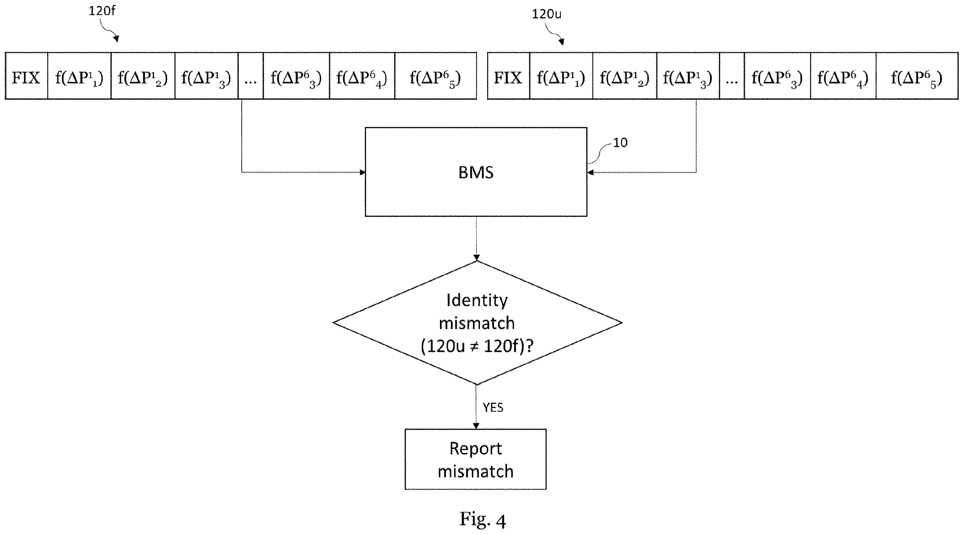

Fig. 4 shows a schematic diagram illustrating a method for checking the identity of the system 100 according to the invention, which can also be implemented by the BMS 10. According to the method 300, the BMS 10 compares a former identifier 120f, generated by the BMS 10 in the past, for example in a preceding cycle, with an updated identifier 120u lastly generated by the BMS 10, in the most recent cycle. The fix identifier part FIX is common to both the former identifier 120f and the updated identifier 120u. However, the part of the identifiers 120u, 120f determined based on the parameter corrections can be different, since the former identifier 120f was determined based on the values of functions of the parameter corrections $\Delta P_{old}{}^i{}_j$ while the updated identifier 120u was generated based on the most recent values of functions of the parameter corrections $\Delta P_{newij}$.

The BMS 10 is configured to report an identity mismatch, i.e. an assumption that an identity of a system corresponding to the former identifier 120f is not the same as an identity of a system corresponding to the updated identifier 120u, if the updated identifier 120u does not correspond to the former identifier 120f within a predefined tolerance. For example, an identity mismatch can be reported if a tolerance defined as:

$$\frac{1}{N \cdot M} \sum_{i,j} \left( \frac{f(\Delta P_{new}{}^i_j) - f(\Delta P_{old}{}^i_j)}{f(\Delta P_{old}{}^i_j)} \right), i = 1,...,N \text{ and } j=1,...,M;$$

(in the present exemplary case, N=6, M=5) exceeds a predefined threshold, for example 0.2 or 0.1.

In other examples, the BMS 10 can be configured to determine one or more correlation values, for example one or more Pearson correlation coefficients, related to the updated identifier 120u and to the former identifier 120f and report an identity mismatch if the one or more correlation values is/are below a predefined correlation threshold.

The aforesaid predefined thresholds and the duration of a time lapse between cycles (i.e. between the repetitions of steps 204 to 208 of Fig. 2) can in particular be chosen such that, if the only difference between the conditions in which the former identifier 120f was determined and the conditions in which the updated identifier 120u was determined are the different ages of the energy storage devices of the system 100, no identity mismatch is reported, since the parameter values can be properly adapted over time, in particular between successive cycles, to the relatively slowly varying conditions of the energy storage devices.

However, if a difference between the updated identifier 120u and the former identifier 120f is due to a manipulation of the system, for example to extract or replace one of the energy storage devices $B_1,..., B_6$, the difference between the updated identifier 120u and the former identifier 120f will be greater and will be reported as an identity mismatch indicative of an unauthorised system manipulation.

**Claims**

1. A method for generating an identifier for a system (100) of energy storage devices $(B_i)$, the system (100) of energy storage devices $(B_i)$ comprising a plurality of mutually connected energy storage devices $(B_i)$, wherein the method comprises:

   - providing a standard model for predicting one or more state parameters $(S_m)$ of the energy storage devices (B;) as a function of one or more measurable physical variables $(X_n)$ and of one or more model parameters $(P_j)$;
   - providing, for each of the energy storage devices $(B_i)$, a set of measured values of each of the one or more physical variables $(X_n)$;
   - determining, for each of the energy storage devices $(B_i)$, at least one parameter correction $(\Delta P^i_j)$ based on the corresponding set of measured values, wherein each parameter correction $(\Delta P^i_j)$ is a correction of a corresponding one of the one or more model parameters $(P_j)$, such that when the one or more model parameters $(P_j)$ are corrected by the corresponding parameter corrections $(\Delta P^i_j)$, the standard model provides a more accurate prediction of the one or more state parameters $(S_m)$ of the corresponding energy storage device $(B_i)$;
   - generating an identifier (120) of the system (100) of energy storage devices $(B_i)$ comprising the at least one parameter correction $(\Delta P^i_j)$ determined for each of the energy storage devices $(B_i)$.

2. The method of claim 1, wherein the identifier (120) of the system (100) of energy storage devices (B;) is generated comprising the at least one parameter correction $(\Delta P^i_j)$ determined for each of the energy storage devices $(B_i)$ in an ordered sequence or structure.

3. The method of claim 1 or 2, wherein the at least one parameter correction $(\Delta P^i_j)$ is determined by a state estimation algorithm, preferably a Kalman filtering algorithm and/or a recursive least square algorithm, and/or by a machine learning algorithm trained on experimental or simulated data containing values of the one or more state parameters and corresponding values of the one or more physical variables, preferably a neural network.

4. The method of any of the preceding claims, wherein the standard model is a preset model, and wherein providing the standard model comprises obtaining predetermined values of the model parameters ($P_j$), preferably values of the model parameters ($P_j$) predetermined by a manufacturer of the system (100) of energy storage devices (B;).

5. The method of any of the preceding claims, wherein providing the standard model comprises determining fitted values of the model parameters ($P_j$) by fitting the model parameters to a set of measured values of the physical variables ($X_n$) obtained for at least a part of the energy storage devices ($B_i$).

6. The method of any of the preceding claims, wherein the one or more physical variables ($X_n$) comprise a temperature, a pressure, a voltage, a current intensity, a time, a combination thereof or a physical quantity determined as a function thereof.

7. The method of any of the preceding claims, wherein the generated identifier (120) further comprises a fix identifier part (122).

8. The method of any of the preceding claims, further comprising storing the generated identifier (120) in an information storage device (20).

9. The method of any of the preceding claims, further comprising encrypting the generated identifier (120).

10. The method of any of the preceding claims, wherein the standard model is an electrical equivalent circuit model, wherein the standard model preferably is a battery model.

11. The method of any of the preceding claims, wherein the steps of

   - providing, for each of the energy storage devices ($B_i$), a set of measured values of each of the one or more physical variables ($X_n$);
   - determining, for each of the energy storage devices ($B_i$), at least one parameter correction ($\Delta P^i_j$) based on the corresponding set of measured values, wherein each parameter correction ($\Delta P^i_j$) is a correction of a corresponding one of the one or more model parameters ($\Delta P^i_j$), such that when the one or more model parameters ($P_j$) are corrected by the corresponding parameter corrections ($\Delta P^i_j$), the standard model provides a more accurate prediction of the one or more state parameters ($S_m$) of the corresponding energy storage device ($B_i$); and
   - generating an identifier (120) of the system (100) of energy storage devices ($B_i$) comprising the at least one parameter correction ($\Delta P^i_j$) determined for each of the energy storage devices ($B_i$);

   are cyclically repeated.

12. A method for checking the identity of a system (100) of energy storage devices ($B_i$) comprising:

   - comparing an updated identifier (120u) with a former identifier (120f), wherein the updated identifier (120u) is an identifier generated for the system (100) of energy storage devices ($B_i$) according to the method of any of the preceding claims based on newly determined values of the parameter corrections ($\Delta P_{newij}$), wherein the former identifier (120f) is a an identifier previously generated for the system (100) of energy storage devices ($B_i$) according to the method of any of the preceding claims based on previously determined values of the parameter corrections ($PC_{oldij}$); and
   - reporting an identity mismatch if the updated identifier (120u) does not correspond to the former identifier (120f).

13. The method of claim 12, wherein an identity mismatch is reported if the updated identifier (120u) does not correspond to the former identifier (120f) within a predefined tolerance.

14. The method of claim 12 or 13, wherein an identity mismatch is reported if a cross-correlation between the updated identifier (120u) and the former identifier (120f) is below a predefined cross-correlation threshold.

15. A battery management system (10) comprising a processor configured to perform the method for providing an identifier for a system (100) of energy storage devices ($B_i$) according to any of claims 1 to 11 and/or the method for checking the identity of a system (100) of energy storage devices ($B_i$) according to any of claims 12 to 14.

**EP 4 060 358 B1**

**Patentansprüche**

1. Verfahren zum Erzeugen einer Kennung für ein System (100) von Energiespeichervorrichtungen ($B_i$), wobei das System (100) von Energiespeichervorrichtungen ($B_i$) eine Vielzahl von miteinander verbundenen Energiespeichervorrichtungen ($B_i$) umfasst, wobei das Verfahren Folgendes umfasst:

   - Bereitstellen eines Standardmodells zum Vorhersagen eines oder mehrerer Zustandsparameter ($S_m$) der Energiespeichervorrichtungen ($B_i$) als eine Funktion einer oder mehrerer messbarer physikalischer Variablen ($X_n$) und eines oder mehrerer Modellparameter ($P_j$);
   - Bereitstellen, für jede der Energiespeichervorrichtungen ($B_i$), eines Satzes von Messwerten jeder der einen oder mehreren physikalischen Variablen ($X_n$);
   - Bestimmen, für jede der Energiespeichervorrichtungen ($B_i$), mindestens einer Parameterkorrektur ($\Delta P^i_j$) basierend auf dem entsprechenden Satz von Messwerten, wobei jede Parameterkorrektur ($\Delta P^i_j$) eine Korrektur eines entsprechenden Modellparameter ($P_j$) der einen oder mehreren Modellparameter ($P_j$) ist, so dass, wenn der eine oder die mehreren Modellparameter ($P_j$) durch die entsprechenden Parameterkorrekturen ($\Delta P^i_j$) korrigiert werden, das Standardmodell eine genauere Vorhersage des einen oder der mehreren Zustandsparameter ($S_m$) der entsprechenden Energiespeichervorrichtung ($B_i$) bereitstellt;
   - Erzeugen einer Kennung (120) des Systems (100) von Energiespeichervorrichtungen ($B_i$), wobei die Kennung (120) die mindestens eine Parameterkorrektur ($\Delta P^i_j$) umfasst, die für jede der Energiespeichervorrichtungen ($B_i$) bestimmt wurde.

2. Verfahren nach Anspruch 1, wobei die Kennung (120) des Systems (100) von Energiespeichervorrichtungen ($B_i$) mit der mindestens einen Parameterkorrektur ($\Delta P^i_j$) erzeugt wird, die für jede der Energiepspeichervorrichtungen ($B_i$) bestimmt wurde, wobei die mindestens eine Parameterkorrektur ($\Delta P^i_j$) in einer geordneten Sequenz oder Struktur sind.

3. Verfahren nach Anspruch 1 oder 2, wobei die mindestens eine Parameterkorrektur ($\Delta P^i_j$) durch einen Zustandsschätzungsalgorithmus bestimmt wird, wobei der Zustandsschätzungsalgorithmus vorzugsweise ein Kalman-Filter-Algorithmus und/oder ein rekursiver Algorithmus der kleinsten Quadrate ist, und/oder durch einen Maschinenlernalgorithmus bestimmt wird, der auf experimentelle oder simulierte Daten trainiert ist, die Werte des einen oder der mehreren Zustandsparameter und entsprechende Werte der einen oder mehreren physikalischen Variablen enthalten, wobei der Maschinenlernalgorithmus vorzugsweise ein neuronales Netzwerk ist.

4. Verfahren nach einem der vorhergehenden Ansprüche, wobei das Standardmodell ein voreingestelltes Modell ist, und wobei das Bereitstellen des Standardmodells das Erhalten vorbestimmter Werte der Modellparameter ($P_j$) umfasst, vorzugsweise Werte der Modellparameter ($P_j$), die durch einen Hersteller des Systems (100) von Energiespeichervorrichtungen (Bi) vorbestimmt wurden.

5. Verfahren nach einem der vorhergehenden Ansprüche, wobei das Bereitstellen des Standardmodells das Bestimmen angepasster Werte der Modellparameter ($P_j$) durch Anpassen der Modellparameter an einen Satz von Messwerten der physikalischen Variablen ($X_n$) umfasst, die für mindestens einen Teil der Energiespeichervorrichtungen ($B_i$) erhalten wurden.

6. Verfahren nach einem der vorhergehenden Ansprüche, wobei die eine oder mehreren physikalischen Variablen ($X_n$) eine Temperatur, einen Druck, eine Spannung, eine Stromstärke, eine Zeit, eine Kombination davon oder eine physikalische Größe umfassen, die als eine Funktion davon bestimmt wird.

7. Verfahren nach einem der vorhergehenden Ansprüche, wobei die erzeugte Kennung (120) ferner einen festen Kennungsteil (122) umfasst.

8. Verfahren nach einem der vorhergehenden Ansprüche, das ferner das Speichern der erzeugten Kennung (120) in einer Informationsspeichervorrichtung (20) umfasst.

9. Verfahren nach einem der vorhergehenden Ansprüche, das ferner das Verschlüsseln der erzeugten Kennung (120) umfasst.

10. Verfahren nach einem der vorhergehenden Ansprüche, wobei das Standardmodell ein elektrisches Ersatzschaltungsmodell ist, wobei das Standardmodell vorzugsweise ein Batteriemodell ist.

**11.** Verfahren nach einem der vorhergehenden Ansprüche, wobei die Schritte des

- Bereitstellen, für jede der Energiespeichervorrichtungen ($B_i$), eines Satzes von Messwerten jeder der einen oder mehreren physikalischen Variablen ($X_n$);
- Bestimmen, für jede der Energiespeichervorrichtungen ($B_i$), mindestens einer Parameterkorrektur ($\Delta P^i_j$) basierend auf dem entsprechenden Satz von Messwerten, wobei jede Parameterkorrektur ($\Delta P^i_j$) eine Korrektur eines entsprechenden Modellparameter ($P_j$) der einen oder mehreren Modellparameter ($P_j$) ist, so dass, wenn der eine oder die mehreren Modellparameter ($P_j$) durch die entsprechenden Parameterkorrekturen ($\Delta P^i_j$) korrigiert werden, das Standardmodell eine genauere Vorhersage des einen oder der mehreren Zustandsparameter ($S_m$) der entsprechenden Energiespeichervorrichtung ($B_i$) bereitstellt;
- Erzeugen einer Kennung (120) des Systems (100) von Energiespeichervorrichtungen ($B_i$), wobei die Kennung (120) die mindestens eine Parameterkorrektur ($\Delta P^i_j$) umfasst, die für jede der Energiespeichervorrichtungen ($B_i$) bestimmt wurde;

zyklisch wiederholt werden.

**12.** Verfahren zum Überprüfen der Identität eines Systems (100) von Energiespeichervorrichtungen ($B_i$), wobei das Verfahren Folgendes umfasst:

- Vergleichen einer aktualisierten Kennung (120u) mit einer früheren Kennung (120f), wobei die aktualisierte Kennung (120u) eine Kennung ist, die für das System (100) von Energiespeichervorrichtungen ($B_i$) gemäß dem Verfahren nach einem der vorhergehenden Ansprüche basierend auf neu bestimmten Werten der Parameterkorrekturen ($\Delta P_{newij}$) erzeugt wurde, wobei die frühere Kennung (120f) eine Kennung ist, die zuvor für das System (100) von Energiespeichervorrichtungen ($B_i$) gemäß dem Verfahren nach einem der vorhergehenden Ansprüche basierend auf zuvor bestimmten Werten der Parameterkorrekturen ($PC_{oldij}$) erzeugt wurde; und
- Melden einer Identitätsnichtübereinstimmung, wenn die aktualisierte Kennung (120u) nicht der früheren Kennung (120f) entspricht.

**13.** Verfahren nach Anspruch 12, wobei eine Identitätsnichtübereinstimmung gemeldet wird, wenn die aktualisierte Kennung (120u) nicht der früheren Kennung (120f) innerhalb einer vordefinierten Toleranz entspricht.

**14.** Verfahren nach Anspruch 12 oder 13, wobei eine Identitätsnichtübereinstimmung gemeldet wird, wenn eine Kreuzkorrelation zwischen der aktualisierten Kennung (120u) und der früheren Kennung (120f) unter einem vordefinierten Kreuzkorrelationsschwellenwert liegt.

**15.** Batterieverwaltungssystem (10), das einen Prozessor umfasst, der dazu konfiguriert ist, das Verfahren zum Bereitstellen einer Kennung für ein System (100) von Energiespeichervorrichtungen ($B_i$) nach einem der Ansprüche 1 bis 11 und/oder das Verfahren zum Überprüfen der Identität eines Systems (100) von Energiespeichervorrichtungen ($B_i$) nach einem der Ansprüche 12 bis 14 durchzuführen.

**Revendications**

**1.** Procédé de génération d'un identifiant pour un système (100) de dispositifs de stockage d'énergie ($B_i$), le système (100) de dispositifs de stockage d'énergie ($B_i$) comprenant une pluralité de dispositifs de stockage d'énergie ($B_i$) mutuellement connectés, le procédé comprenant:

- fournir un modèle standard pour prédire un ou plusieurs paramètres d'état ($S_m$) des dispositifs de stockage d'énergie ($B_i$) comme une fonction d'une ou plusieurs variables physiques mesurables ($X_n$) et d'un ou plusieurs paramètres de modèle ($P_j$);
- fournir, pour chacun des dispositifs de stockage d'énergie ($B_i$), un ensemble de valeurs mesurées de chacune des une ou plusieurs variables physiques ($X_n$);
- déterminer, pour chacun des dispositifs de stockage d'énergie ($B_i$), au moins une correction de paramètre ($\Delta P^i_j$) sur la base de l'ensemble correspondant de valeurs mesurées, dans lequel chaque correction de paramètre ($\Delta P^i_j$) est une correction d'un correspondant paramètre de modèle ($P_j$) des un ou plusieurs paramètres de modèle ($P_j$), de sorte que lorsque les un ou plusieurs paramètres de modèle ($P_j$) sont corrigés par les corrections de paramètre correspondantes ($\Delta P^i_j$), le modèle standard fournit une prédiction plus précise des un ou plusieurs paramètres d'état ($S_m$) du dispositif de stockage d'énergie correspondant ($B_i$);

- générer un identifiant (120) du système (100) de dispositifs de stockage d'énergie ($B_i$) comprenant l'au moins une correction de paramètre ($\Delta P^i_j$) déterminée pour chacun des dispositifs de stockage d'énergie ($B_i$).

2. Procédé selon la revendication 1, dans lequel l'identifiant (120) du système (100) de dispositifs de stockage d'énergie ($B_i$) est généré comprenant l'au moins une correction de paramètre ($\Delta P^i_j$) déterminée pour chacun des dispositifs de stockage d'énergie ($B_i$) dans une séquence ou une structure ordonnée.

3. Procédé selon la revendication 1 ou 2, dans lequel l'au moins une correction de paramètre ($\Delta P^i_j$) est déterminée par un algorithme d'estimation d'état, de préférence un algorithme de filtrage de Kalman et/ou un algorithme des moindres carrés récursifs, et/ou par un algorithme d'apprentissage automatique entraîné sur des données expérimentales ou simulées contenant des valeurs des un ou plusieurs paramètres d'état et des valeurs correspondantes des une ou plusieurs variables physiques, de préférence un réseau neuronal.

4. Procédé selon l'une quelconque des revendications précédentes, dans lequel le modèle standard est un modèle prédéfini, et dans lequel fournir le modèle standard comprend obtenir des valeurs prédéterminées des paramètres de modèle ($P_j$), de préférence des valeurs des paramètres de modèle ($P_j$) prédéterminées par un fabricant du système (100) de dispositifs de stockage d'énergie ($B_i$).

5. Procédé selon l'une quelconque des revendications précédentes, dans lequel fournir le modèle standard comprend déterminer des valeurs ajustées des paramètres de modèle ($P_j$) en ajustant les paramètres de modèle à un ensemble de valeurs mesurées des variables physiques ($X_n$) obtenues pour au moins une partie des dispositifs de stockage d'énergie ($B_i$).

6. Procédé selon l'une quelconque des revendications précédentes, dans lequel les une ou plusieurs variables physiques ($X_n$) comprennent une température, une pression, une tension, une intensité de courant, un temps, une combinaison de ceux-ci ou une quantité physique déterminée comme une fonction de ceux-ci.

7. Procédé selon l'une quelconque des revendications précédentes, dans lequel l'identifiant généré (120) comprend en outre une partie d'identifiant fixe (122).

8. Procédé selon l'une quelconque des revendications précédentes, comprenant en outre stocker l'identifiant généré (120) dans un dispositif de stockage d'informations (20).

9. Procédé selon l'une quelconque des revendications précédentes, comprenant en outre crypter l'identifiant généré (120).

10. Procédé selon l'une quelconque des revendications précédentes, dans lequel le modèle standard est un modèle de circuit électrique équivalent, dans lequel le modèle standard est de préférence un modèle de batterie.

11. Procédé selon l'une quelconque des revendications précédentes, dans lequel les étapes consistant à

- fournir, pour chacun des dispositifs de stockage d'énergie ($B_i$), un ensemble de valeurs mesurées de chacune des une ou plusieurs variables physiques ($X_n$);
- déterminer, pour chacun des dispositifs de stockage d'énergie (Bi), au moins une correction de paramètre ($\Delta P^i_j$) sur la base de l'ensemble correspondant de valeurs mesurées, dans lequel chaque correction de paramètre ($\Delta P^i_j$) est une correction d'un correspondant paramètre de modèle ($P_j$) des un ou plusieurs paramètres de modèle ($P_j$), de sorte que lorsque les un ou plusieurs paramètres de modèle ($P_j$) sont corrigés par les corrections de paramètre correspondantes ($\Delta P^i_j$), le modèle standard fournit une prédiction plus précise des un ou plusieurs paramètres d'état ($S_m$) du dispositif de stockage d'énergie correspondant ($B_i$);
- générer un identifiant (120) du système (100) de dispositifs de stockage d'énergie ($B_i$) comprenant l'au moins une correction de paramètre ($\Delta P^i_j$) déterminée pour chacun des dispositifs de stockage d'énergie ($B_i$);

sont répétées cycliquement.

12. Procédé de vérification de l'identité d'un système (100) de dispositifs de stockage d'énergie ($B_i$) comprenant:

- comparer un identifiant mis à jour (120u) avec un identifiant précédent (120f), dans lequel l'identifiant mis à jour (120u) est un identifiant généré pour le système (100) de dispositifs de stockage d'énergie ($B_i$) selon le

procédé de l'une quelconque des revendications précédentes sur la base de valeurs nouvellement déterminées des corrections de paramètre ($\Delta P_{newij}$), dans lequel l'identifiant précédent (120f) est un identifiant précédemment généré pour le système (100) de dispositifs de stockage d'énergie ($B_i$) selon le procédé de l'une quelconque des revendications précédentes sur la base de valeurs précédemment déterminées des corrections de paramètre ($PC_{oldij}$); et
- rapporter un défaut d'identité si l'identifiant mis à jour (120u) ne correspond pas à l'identifiant précédent (120f).

13. Procédé selon la revendication 12, dans lequel un défaut d'identité est rapporté si l'identifiant mis à jour (120u) ne correspond pas à l'identifiant précédent (120f) dans une tolérance prédéfinie.

14. Procédé selon la revendication 12 ou 13, dans lequel un défaut d'identité est rapporté si une corrélation croisée entre l'identifiant mis à jour (120u) et l'identifiant précédent (120f) est inférieure à un seuil de corrélation croisée prédéfini.

15. Système de gestion de batteries (10) comprenant un processeur configuré pour réaliser le procédé de fourniture d'un identifiant pour un système (100) de dispositifs de stockage d'énergie ($B_i$) selon l'une quelconque des revendications 1 à 11 et/ou le procédé de vérification de l'identité d'un système (100) de dispositifs de stockage d'énergie ($B_i$) selon l'une quelconque des revendications 12 à 14.

Fig. 1

200

Provide standard
model — 202

↓

Provide measured
values of physical
variables — 204

↓

Determine parameter
corrections based on
measured values — 206

↓

Generate identifier
comprising parameter
corrections — 208

Fig. 2

Fig. 3

120f

| FIX | $f(\Delta P^1_1)$ | $f(\Delta P^1_2)$ | $f(\Delta P^1_3)$ | ... | $f(\Delta P^6_3)$ | $f(\Delta P^6_4)$ | $f(\Delta P^6_5)$ |

120u

| FIX | $f(\Delta P^1_1)$ | $f(\Delta P^1_2)$ | $f(\Delta P^1_3)$ | ... | $f(\Delta P^6_3)$ | $f(\Delta P^6_4)$ | $f(\Delta P^6_5)$ |

BMS — 10

Identity mismatch
(120u ≠ 120f)?

YES

Report mismatch

Fig. 4

EP 4 060 358 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10145898 B2
- EP 2571076 B1
- EP 2571131 B1
- CA 2788472 A1

**Non-patent literature cited in the description**

- **Y. WANG et al.** A comprehensive review of standard modeling and state estimation approaches for advanced battery management systems. *Renew. Sustain. Energy Rev.,* 2020, vol. 131 (July), 110015
- **B. WU ; W. D. WIDANAGE ; S. YANG ; X. LIU.** Battery digital twins: Perspectives on the fusion of models, data and artificial intelligence for smart battery management systems. *Energy and AI,* 2020, vol. 1, 100016
- **M. A. HANNAN ; M. S. H. LIPU ; A. HUSSAIN ; A. MOHAMED.** A review of lithium-ion battery state of charge estimation and management system in electric vehicle applications: Challenges and recommendations. *Renew. Sustain. Energy Rev.,* 2017, vol. 78, 834-854
- **C. ZHANG et al.** Online estimation of battery equivalent circuit model parameters and state of charge using decoupled least squares technique. *Energy,* 2018, vol. 142, 678-688
- **M. A. HANNAN et al.** A review of lithium-ion battery state of charge estimation and management system in electric vehicle applications: Challenges and recommendations. *Renew. Sustain. Energy Rev.,* 2017, vol. 78, 834-854